Europäisches Patentamt

European Patent Office

Office européen des brevets

(19)

(11) Veröffentlichungsnummer : **0 055 878**
**B1**

(12)

# EUROPÄISCHE PATENTSCHRIFT

(45) Veröffentlichungstag der Patentschrift :
24.04.85

(21) Anmeldenummer : 81201377.9

(22) Anmeldetag : 17.12.81

(51) Int. Cl.⁴ : **G 02 C   7/02**

(54) **Brillenglas für Kurzsichtige.**

(30) Priorität : 07.01.81 CH 48/81

(43) Veröffentlichungstag der Anmeldung :
14.07.82 Patentblatt 82/28

(45) Bekanntmachung des Hinweises auf die Patenterteilung : 24.04.85 Patentblatt 85/17

(84) Benannte Vertragsstaaten :
AT BE DE FR GB IT LU NL SE

(56) Entgegenhaltungen :
BE-A-  877 990
GB-A- 2 034 498
NL-C-    3 474

(73) Patentinhaber : **Wrobel, Wolfgang**
**Bahnhofstrasse 1**
**CH-2500 Biel (CH)**

(72) Erfinder : **Wrobel, Wolfgang**
**Bahnhofstrasse 1**
**CH-2500 Biel (CH)**

(74) Vertreter : **Velgo, Miroslav et al**
**Bovard AG Patentanwälte VSP Optingenstrasse 16**
**CH-3000 Bern 25 (CH)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die Erfindung geht aus von einem Brillenglas für Kurzsichtige, bestehend aus hochbrechendem Trägerglas mit einem kreisrunden oder ovalen Lentikularausschliff auf seiner Rückfläche.

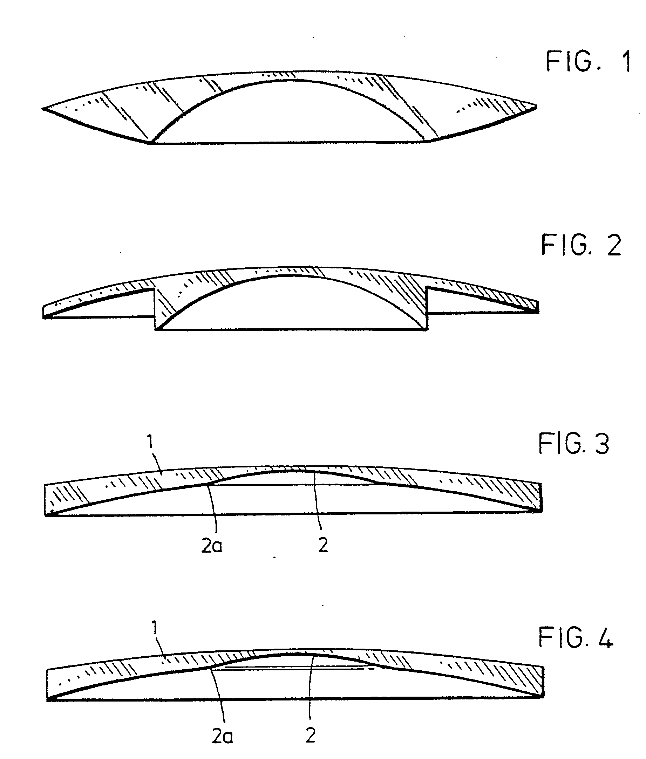

Die herkömmliche Versorgung von Kurzsichtigen ist schwierig durch die Randdicke der zu tragenden Gläser, was enorme Gewichtsprobleme mit sich bringt und die Auswahl der Brillenfassungen einschränkt. Auch der unerwünschte Effekt, der sogenannte « Flaschenbodeneffekt », ist bei diesen Gläsern zu bemängeln. Selbst bei den derzeit erhältlichen Brillengläsern mit Lentikularausschliffen sind die Gewichtsprobleme und die ästhetischen Mängel nicht behoben worden. Die bekannten Gläser dieser Art sind in den Fig. 1 und 2 dargestellt ; die Ausführungsform nach der Fig. 1 besteht aus einem positiven Trägerglas mit einem kreisrunden Lentikularausschliff, diejenige nach der Fig. 2 besteht aus einem planen Trägerglas, ebenfalls mit einem kreisrunden Lentikularausschliff.

In der GB-A-2 034 498 ist eine ophthalmische Linse für Kurzsichtige beschrieben, deren negatives Trägerglas einen Ausschliff auf der Vorderfläche aufweist.

Solche Brillengläser haben schlechte optische Eigenschaften und wirken unästhetisch. Dadurch, dass die Vorderfläche des negativen Trägerglases nicht sphärisch (zylindrisch) gestaltet ist, sondern einen positiv nach negativ verlaufenden Vorderflächenanschliff hat und eine enorme Reflexbildung aufweist, ist die optische Abbildung schlecht, wie beispielsweise bei bikonvexen Brillengläsern, die in der Fig. 6 dieser Patentschrift dargestellt sind.

Der in dieser Druckschrift erwähnte unverwünschte « Flaschenbodeneffekt » (« bull's eye effect ») wird nicht durch scharfe Kanten auf den Flächen der ophthalmischen Linse verursacht, sondern durch die grosse Randdicke der Linse. Die Randdicke von auf diese Weise gestalteten Brillengläsern wird nämlich nur geringfügig herabgesetzt, so dass der unästhetisch wirkende « Flaschenbodeneffekt » nicht vollständig beseitigt wird.

Es ist die Aufgabe der Erfindung, ein in dem Sinne verbessertes Brillenglas für Kurzsichtige vorzuschlagen, bei welchem die genannten Nachteile der bekannten Brillengläser für Kurzsichtigen beseitigt werden. Ausserdem soll der Uebergang des Lentikularausschliffes in das Trägerglas weitgehend maskiert und somit praktisch unsichtbar gemacht werden. Diese Aufgabe wird bei einem Brillenglas für Kurzsichtige nach dem Oberbegriff des Anspruches 1 dadurch gelöst, dass der Lentikularausschliff in ein meniskusförmiges, negatives Trägerglas verlaufend eingeschliffen ist, wobei der Durchmesser des Ausschliffs kleiner als gewöhnlich (beispielsweise 22-25 mm bei − 14 dptr.) gewählt wird.

Der Erfindungsgegenstand wird nachstehend anhand der Zeichnung beispielsweise näher erläutert. Es zeigen

Figur 1 einen Schnitt eines bekannten Brillenglases, das aus einem positiven Trägerglas mit einem kreisrunden Lentikularausschliff besteht,

Figur 2 einen Schnitt eines bekannten Brillenglases, das aus einem planen Trägerglas mit einem kreisrunden Lentikularausschliff besteht,

Figur 3 einen Schnitt des erfindungsgemässen Brillenglases, das aus einem negativen Trägerglas mit einem kreisrunden oder ovalen Lentikularausschliff besteht, und

Figur 4 einen Schnitt des erfindungsgemässen Brillenglases mit einem kontinuierlich verlaufenden Uebergang des Lentikularausschliffes in das negative Trägerglas in asphärischer Form.

Prinzipiell werden die Brillengläser nach den Fig. 3 und 4 aus hochbrechendem Trägerglas 1 (z. B. Leichtflint, Brechungsindex 1,7) hergestellt. Ein Lentikularausschliff 2 von variabler Grösse wird je nach der gewünschten definitiven Stärke in ein meniskusförmiges negatives Trägerglas 1 auf seiner Rückfläche eingearbeitet. Der Lentikularausschliff 2 wird in das negative Trägerglas 1 in einer kreisrunden oder ovalen Form eingeschliffen, wobei die Ausmasse eines solchen Lentikularausschliffes gewöhnlich kleiner sind als diejenigen der herkömmlichen Lentikularausschliffe. Der Uebergang 2a des Lentikularausschliffes 2 in das Trägerglas 1 ist kontinuierlich verlaufend in asphärischer Form gestaltet (siehe Fig. 4).

Die Grösse des Durchmessers eines kreisrunden Lentikularausschliffes sowie die Dicke des Trägerglases richten sich nach der notwendigen Korrektion beim Kunden und müssen deshalb individuell bestimmt werden. So zum Beispiel bei einer Fehlsichtigkeit von − 14 dptr. wird ein Trägerglas von − 3,0 dptr. mit einer ausreichenden Mittendicke geschliffen, welches den Ausschliff von − 14,0 dptr. bei einem Durchmesser von ca. 22 bis 25 mm mit einer anschliessenden Mittendicke von ca. 0,7 mm erlaubt (siehe die Fig. 3 und 4). Auf gleiche Weise kann in das Trägerglas z. B. sph. − 1,0 = cyl. − 3,0 eine Korrektion des Lentikulars in einer ovalen Form eingeschliffen werden. Das geringere Gewicht des Brillenglases ist somit ausschliesslich auf den kleinen Durchmesser des Lentikularausschliffes zurückzuführen.

Um nun den entstandenen Rand des Lentikularausschliffes im negativen Trägerglas unsichtbar zu machen, wird der Lentikularrand mit einem Hartgummi oder einem ähnlichen flexiblen Material fliessend wegpoliert (siehe die Fig. 4).

Eine andere Herstellungsmöglichkeit des Lentikularausschliffes und dessen kontinuierlichen Ueberganges in das Trägerglas besteht darin, dass für jede Korrektion ein eigenes Schleifwerkzeug angefertigt wird, das genau der definitiven Form des Lentikularausschliffes und des Trägerglases entspricht. Dabei wird auch der Uebergang des Lentikularausschliffes in das Trägerglas automatisch fliessend poliert. D. h., dass beim Ausgang der optisch wirksamen Zone (Lentikularausschliff) die Kurve asphärisch in ca. − 3,0 dptr. überläuft.

Die Schleifwerkzeuge können auch vom Lentikularausschliff über das Minusglas zum Rand hin plan bis positiv abgeflacht werden, wodurch die Randdicke und das Gewicht des Brillenglases noch mehr reduziert wird.

Bei astigmatischen Brillengläsern wird selbstverständlich der Zylinder auf der Vorderfläche des Trägerglases angebracht, wodurch z. B. ein kreisrunder Lentikularausschliff beibehalten wird.

Das oben beschriebene Brillenglas mit einem kleineren Lentikularausschliff als derjenige der herkömmlichen Brillengläser ist wesentlich dünner und somit leichter als die herkömmlichen Brillengläser. Wie bekannt, bringt eine starke Brillenglaskorrektion, sobald man mit dem Auge das optische Zentrum verlässt, chromatische oder sphärische Aberrationen, Bildfeldwölbungen usw. mit sich. Somit sind die Randzonen jeglicher starker Brillengläser nicht ausnutzbar. Die Gesichtsfeldeinbusse der oben beschriebenen Brillengläser werden nicht als störend empfunden. Es hat sich schon früher gezeigt, dass selbst kleine Ausschliffe, sofern sie dicht vor das Auge gebracht werden, sich nicht negativ auswirken.

Der von einem Betrachter wahrgenommene ästhetische Effekt ist zufriedenstellend, weil der bei den herkömmlichen Brillengläsern wirkende « Flaschenbodeneffekt » verschwunden ist. Das Brillenglas, dicht vor das Auge angepasst, verkleinert nämlich nur noch dieses und nicht das Gesicht (die Schläfen) dahinter. Der Effekt ist schon dadurch verbessert, dass die starke definitive Korrektion des Lentikulars bereits in ein negatives Trägerglas eingeschliffen wurde, wobei auch der Uebergang des Lentikularausschliffes in das Trägerglas maskiert ist.

Ein gegenüber dem Stand der Technik grösseres Sichtfeld des oben beschriebenen Brillenglases, wodurch für den Träger eine bessere optische Wirkung erreicht wird, ergibt sich aus dem geringen Unterschied zwischen der Definitivstärke des Lentikularausschliffes (z. B. − 14 dptr.) und der Definitivstärke des übrigen Trägerglases (z. B. − 3 dptr.).

**Patentanspruch**

Brillenglas für Kurzsichtige, bestehend aus hochbrechendem Trägerglas mit einem kreisrunden oder ovalen Lentikularausschliff auf seiner Rückfläche, dadurch gekennzeichnet, dass der Lentikularausschliff (2) in ein meniskusförmiges, negatives Trägerglas (1) verlaufend eingeschliffen ist, wobei der Durchmesser des Ausschliffs kleiner als gewöhnlich (beispielsweise 22-25 mm bei − 14 dptr.) gewählt wird.

**Claim**

A spectacle lens for short-sighted persons, consisting of highly refractive base glass having a circular or oval lenticular ground-out portion on its rear face, characterized in that the lenticular ground-out portion (2) is ground passing into a meniscal, negative base glass (1), the diameter of the ground-out portion being selected smaller than usual (for example, 22-25 mm at − 14 diopters).

**Revendication**

Verre de lunette pour myope consistant en un verre porteur à indice de réfraction élevé et présentant sur sa surface arrière une creusure lenticulaire ronde ou ovale, caractérisé en ce que la creusure lenticulaire (2) est meulée pour y établir sa configuration dans un verre porteur négatif (1) en forme de ménisque, le diamètre de la creusure étant choisi plus petit que cela est habituel (par exemple 22-25 mm pour − 14 dptr.).

FIG. 1

FIG. 2

FIG. 3

FIG. 4